# EUROPEAN PATENT SPECIFICATION

(11) **EP 2 596 617 B1**
(45) Date of publication and mention of the grant of the patent: **27.10.2021**
(21) Application number: 12717500.8
(22) Date of filing: 23.01.2012
(51) Int. Cl.: H04L 29/08

(54) **SECURE MOBILE INFORMATION SYSTEM**
SICHERES MOBILES INFORMATIONSSYSTEM
SYSTÈME D'INFORMATION MOBILE SÉCURISÉ

(30) Priority: 21.01.2011 NL 2006052
(43) Date of publication of application: 29.05.2013
(60) Divisional application: 13162579.0
(73) Proprietor: MI Group B.V., 2566 DT Den Haag (NL)
(72) Inventor: HEIMERIKX, Job Daniel Marie, NL-2566DT Den Haag (NL)
(74) Representative: Hoeben, Ferdinand Egon
(86) International application number: PCT/NL2012/050037
(87) International publication number: WO 2012/105829

(56) References cited:
- EP-A2- 2 290 600
- US-A1- 2007 198 314
- US-A1- 2008 027 955
- US-A1- 2008 099 552
- None

## Description

The present invention relates to a method for making specific task information available via a mobile station for the purpose of making task information available, preferably in secured manner, to users at mobile locations at moments when this task information is required. The present invention further relates to computer hardware which is able execute such a method, comprising for instance servers and mobile stations. The present invention further relates to a computer program product which enables the computer hardware to execute a method according to the present invention.

A very large number of users of mobile stations make use of information which this person requires only during specific availability time periods. Such information is usually sensitive in the sense that aspects are involved in respect of the privacy of persons to which the information relates. Airline cabin attendants for instance need information relating to passengers. Such information can relate to a seat number, but also to diet information. Such information has heretofore been provided on lists printed on paper. In addition to data safety aspects of such information lists, according to the present inventors the use of paper is too time-consuming in making the information available to the relevant persons.

D1, US 2008/027955 A1, discloses the storage of time-dependent events in an electronic device. In order to provide an improvement in current practice the present invention relates to a method for making specific task information available via a mobile station, preferably comprising a PDA, tablet or a mobile phone, to a user such as personnel on duty, wherein the method comprises steps for:
- compiling the task information by means of a server,
- transmitting the task information from the server to the mobile station of the user,
- determining an availability time period for the task information for the users,
- making the task information retrievable in readable manner on the mobile station within the availability time period.

By means of such a method according to the present invention it becomes possible to make information available to a user of a mobile station for an availability time period. This implies that the user of the mobile station can display the information on for instance a screen only for the work period during a flight. It is important here that, on the basis of for instance roster information, the availability time period is known and can be linked to the specific task information. Many work situations can be envisaged wherein it is possible to determine that specific task information may be retrievable by the user on the basis of for instance the roster information.

In a first preferred embodiment information is stored in encrypted manner in a memory of the mobile station and/or the information is transmitted in encrypted form from the server to the mobile station. It hereby becomes possible to secure the information and to only decrypt it when retrieval thereof is allowed. Even if access is gained to the background data files, the information will not be available because the information can only be decrypted during a determined period of time.

The method more preferably comprises steps for the server accessing source data systems, such as systems holding data of importance to the user during the availability time period, which systems can for instance comprise operational information of airlines or other companies wherein information can be of importance to the user in a predeterminable availability time period.

It hereby becomes possible to fit into a system and method according to the present invention specific useful information which is available in systems of for instance an airline which are already per se operational.

In a further preferred embodiment the method comprises steps for sending a push message, such as an SMS or an e-mail, from the server for the purpose of indicating to the mobile station and/or the user that task information with an upcoming availability time period has been compiled for retrieval thereof. A person may perhaps not always be within the range of a connecting network. By sending such a call (push message), which can be performed via a low-level telephony network, the user is alerted that connection is necessary. In the case of for instance flight personnel such information can hereby already be transferred to the mobile station prior to a briefing which normally takes place before the flight.

Encryption of the task information and/or dividing thereof into transport packets prior to transmission to the mobile station provides the option of optimizing transport via mobile networks. For delivery of the data to the mobile station the method preferably further comprises steps by the mobile station and/or the server for determining the desirable data transport technology for delivering this information to the mobile station, such as via a WIFI connection and/or a mobile data connection, UMTS connection, 2G connection, 3G connection or 4G connection.

For the purpose of securing the data the method further comprises steps for erasing the task information on the basis of an indicative event, such as expiry of the availability time period, expiry of a predeterminable time period of non-use of the mobile station, expiry of a predetermined time period of non-response to a notification to the mobile station and/or a number of incorrect attempts to log into the mobile station or an application for displaying the task information. Even if the mobile station is lost or falls into the hands of a non-authorized user, the task information with privacy-sensitive aspects remains safe and not accessible to third parties.

Erasing of the information in the memory preferably takes place by means of steps for sending new data which overwrites the old data, or by sending an empty datafile to overwrite the old data. The method more preferably comprises steps for sending additions or changes entered by the user from the mobile station to the server.

For the purpose of sending data between the mobile station and the server use is more preferably made of a VPN connection.

Use is more preferably made on the mobile station of a dedicated application relating to execution of method steps in respect of the mobile station. Such an application can be easily retrieved by means of clicking on a link or an icon, after which access is gained to all aspects of the invention and all information, under the condition that the availability time period is in effect. The method more preferably comprises steps for the server querying an operations application of an operations system relating to the compiling of the task information. It hereby becomes possible in time-critical manner to collect diverse desirable information per se present in the operational systems and to provide it to the users by means of a method for the present invention.

According to a preferred embodiment, the task information is information relating to work activities of the user, such as updated passenger lists with seat numbers.

According to a further preferred embodiment, the method further comprises steps for performing checks, steps relating to the functioning of the users, such as a so-called "fit to fly" test, a questionnaire relating to food safety, the entering of medical registration information.

A further aspect according to the present invention relates to a method for performing payment transactions, preferably by means of steps according to one or more of the foregoing claims, by means of the mobile station in communicative co-action with a mobile payment terminal, wherein the method comprises steps for:
- making use of data entered into the mobile station relating to the transaction, such as the product or service being paid for,
- receiving the data relating to the payment in the mobile payment terminal,
- reading relevant data from a transaction card or service card, such as a credit card or a debit card, and/or an associated authorization code such as a pin code,
- processing data relating to authorization of the payment in the mobile payment terminal,
- providing a signal relating to acceptance of the payment or a signal relating to non-acceptance of the payment,
- transmitting data relating to the authorization from the payment terminal to the mobile station and storing relevant data in respect of the payment until a connection can be provided to a processing device such as a payment server of a service provider for performing payments.

An advantage of such a method according to the present invention is that payment transactions can be carried out when a connection to a payment server of a payment service provider is impossible, such as on board a vehicle such as a ship or aircraft. It is particularly advantageous that payment transactions can be carried out with a payment terminal complying with payment terminal regulations or payment terminal standards, while off-line transactions also become possible, and an increased transaction safety is also realized. A further important advantage is that the actual collection of the background money amounts is greatly increased since, among other reasons due to the great latency between the payment transactions and the settlement of the payment, resulted in the prior art in considerable loss in collectable transaction amounts.

A further advantage of such a method is that processing of the payments by the payment server of a payment service provider can be performed at the moment that the mobile station, preferably an apparatus carried by a crew member, is used outside the vehicle as soon as the crew member has a network connection. This is particularly advantageous compared to the present payment system on board for instance aircraft, wherein the data relating to the payments are processed with greater delay because they must either be processed manually or because the payment systems are used on successive flights and remain behind in the aircraft, instead the payment data leave the aircraft with the mobile station.

A further advantage of such a method is that use can be made in the payment terminal of information recently obtained, for instance shortly before a flight, via the mobile station for use during the authorization. Updated blacklists can for instance hereby be provided to the payment terminal.

The method more preferably comprises steps for sending data relating to a passenger, with or forming part of the data relating to the payment, from the mobile station to the mobile payment terminal, wherein these data are processed as part of the authorization step. It hereby becomes possible to apply data from the transaction provider, such as the airline, these data relating to the passenger, in the authorization of the payment. A transaction can for instance hereby be refused when the credit card presented by the passenger does not satisfy determined standards. Use is also made here of a database (blacklist) of the payment service provider. For this purpose blacklist data relating to a payment service provider are more preferably transferred shortly before the flight to the mobile station, preferably in combination with the task information, more preferably encrypted.

In a further preferred embodiment the mobile station and/or the mobile payment terminal are used in mutual communication during performing of the transaction, preferably using two or more mobile payment terminals per mobile station. The payment terminal can hereby make use of data present in the mobile station, whereby such data can be provided shortly before the flight in updated form to the mobile station in accordance with the above preferred embodiments.

The mobile station is more preferably not connected to a computer network, is preferably not connected to a computer network outside a vehicle inside which the mobile station is used, more preferably wherein the mobile station is not connected to the internet and/or any payment server of a payment service provider. The mobile payment terminal is more preferably connected only to the mobile station or an intermediate mobile payment terminal, wherein the mobile stations are preferably coupled to each other in a so-called master-slave arrangement. The stated advantages are hereby achieved in practical manner and it is possible to serve multiple passengers simultaneously.

A further aspect according to the present invention relates to a mobile payment terminal adapted to perform method steps according to one or more of the foregoing claims, provided with connecting means for making a connection to the mobile station according to one or more of the foregoing claims, comprising at least wireless connecting means and/or wired connecting means, a processing unit and a safe module for performing a payment authorization, such as a payment authorization module with EMV approval. This aspect achieves at least the advantages as described in the foregoing.

A further aspect according to the present invention relates to a method for processing a payment transaction by a payment server of a service provider according to one or more of the foregoing claims, comprising steps for:
- detecting a connection or a log-on of one of the mobile stations,
- receiving data relating to the payment and the authorization thereof for processing thereof in the payment system of the payment service provider.

A further aspect of the present invention relates to computer hardware such as a mobile station and/or a server comprising means for performing all steps in accordance with the present invention.

The advantages as described in the foregoing with reference to the method are gained by means of such computer hardware.

A further aspect of the present invention relates to a computer program product comprising software which, when run on suitable computer hardware, such as a mobile station and/or a server, enables the computer hardware to perform all steps of at least a method in accordance with the present invention.

The advantages as described in the foregoing with reference to the method are gained by means of such computer program products.

Further advantages, features and details of the present invention will be described in greater detail hereinbelow on the basis of one or more preferred embodiments, with reference to the accompanying figures. Similar but not necessarily identical components of different preferred embodiments are designated with the same reference numerals.
Fig. 1 shows a system overview with system components according to a preferred embodiment according to the present invention for performing a method according to the present invention.
Fig. 2 shows a system overview with system components according to a preferred embodiment according to the present invention for performing a method according to the present invention.
Fig. 3 shows a schematic representation of a further preferred embodiment according to the present invention.
Fig. 4 shows a schematic representation of a further preferred embodiment according to the present invention.

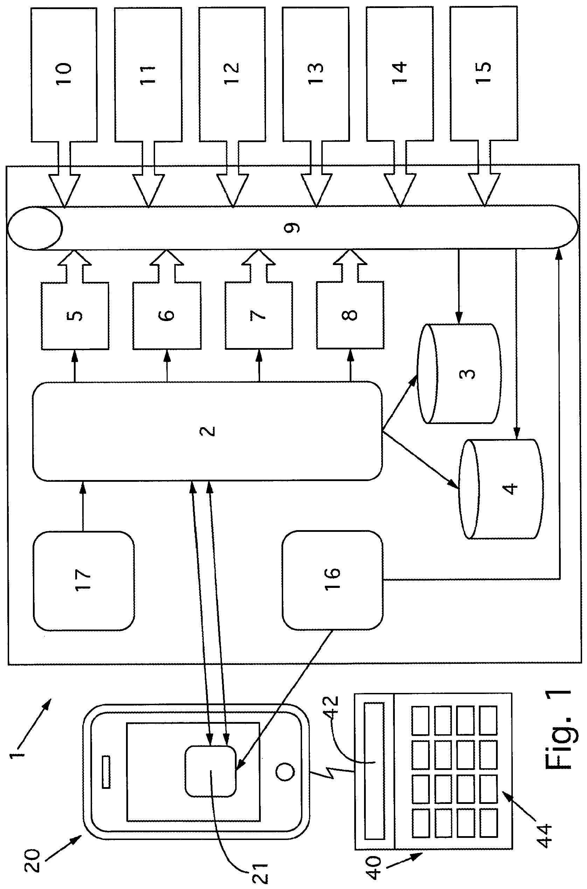

A first preferred embodiment (Fig. 1) according to the present invention relates to a task information distribution system 1. This task information distribution system 1 comprises a number of components. A central compiling component 2 functions for the purpose of compiling information which can be used on the application on mobile station 20. The application on mobile station 20 is able to display the data to the user in a manner which is clear to the user. For this purpose the information is formatted as efficiently as possible by the central compiling component. There may be a great variety of information.

This information can include the following components: a full passenger list (e-PIL); extensive customer information such as CISKA; FB enrolment; information relating to passenger upgrades, information relating to destinations, information relating to the layout of seats, information relating to the roster of personnel on the flight, information relating to load, information relating to an In-flight Handling Manual, purser folder, CIS, cabin bulletins /cabin log, VVP / WRR and so on.

Further provided for is the performing of tests, such as a "fit to fly" test. Further provided is an information package with information relating to the city where the personnel have to stay.

For the purpose of providing up-to-date information the system according to the present invention makes a connection with information sources, such as information systems 10-15, of the airline. These systems provide for instance passenger lists, information relating to personnel, information relating to aircraft, information relating to safety systems, information relating to rosters and the like.

For the purpose of providing the coupling to the central compiling component 2, application-dependent connectors 5-8 are provided which make connections by means of a network bus system to the stand-alone information systems 10-15 of the airline.

The central compiling component makes use of databases 3, 4 for storing information which remains unchanged for a long time in database 4 and for temporarily storing regularly updated data in database 3.

Depending on the roster of a user, messages are sent via a notification unit 16 to the mobile station of this user when this user has no operational data connection. Use can be made for this purpose of a mobile telephone network, for instance a mobile network based on GSM technology.

The data transfer between the central compiling component 2 and mobile station 20 preferably takes place via a fast data network, such as a higher level mobile network or a WIFI network.

Payment terminals 40 are coupled directly or mutually via a master-slave arrangement to a respective mobile station 20.

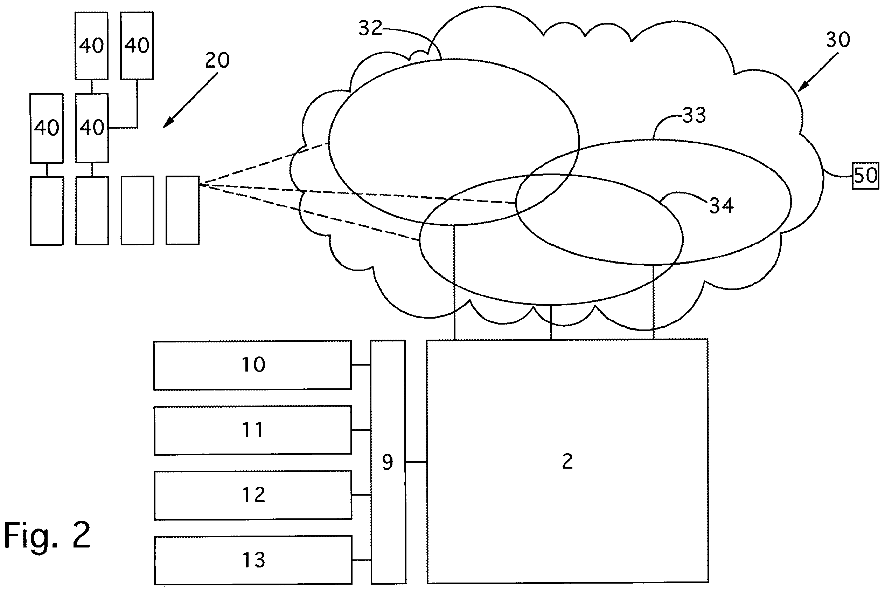

Shown in Fig. 2 is how use is made of different types of network. The central compiling component 2 is connected to mobile stations 20 via a network, such as the internet, in co-action with any public network 32, 34 or a private network 33.

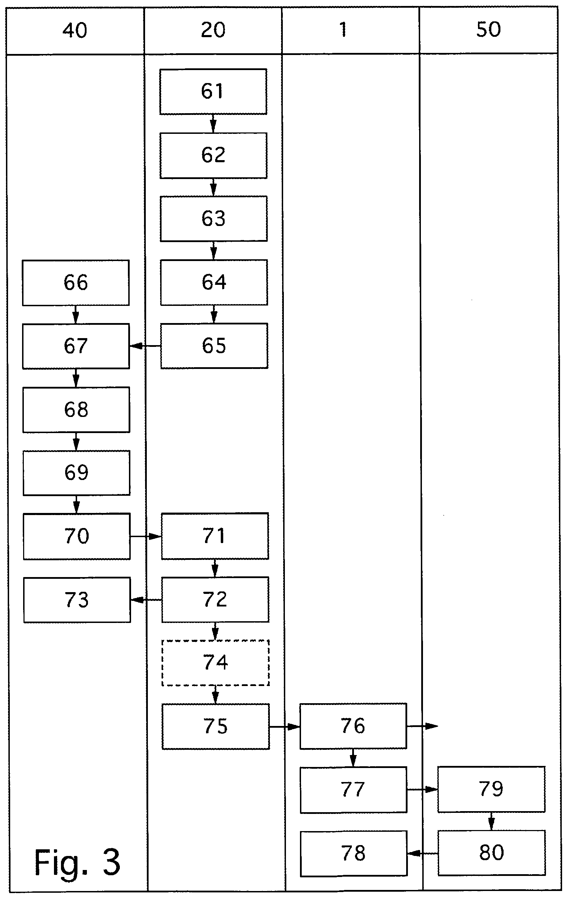

Fig. 3 shows a sales transaction by means of the payment terminal and the mobile station, such as here the tablet computer or the mobile phone. The method begins in step 61 with the selection of the passenger or also the seat on the mobile station by the crew member. The products are then selected in step 62. The payment method is selected in step 63. The payment terminal is selected in step 64. In step 65 the data relating to the payment, such as the products or services, and the data relating to the passenger (passenger name record) are sent to the payment terminal.

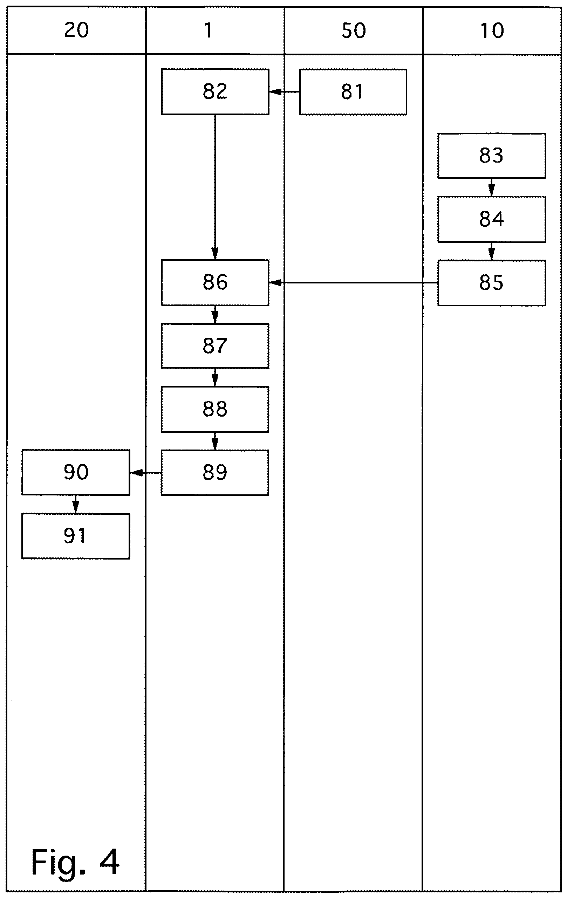

In step 66 the credit card is presented to the payment terminal, for instance by insertion or tapping. In step 66 the payment terminal receives the payment data comprising the amount and the details. In step 68 authorization is given by the customer, for instance by entering a PIN. Authorization can also be realized in other desired manner, this being associated with the card used in a manner which will be apparent to the skilled person. The payment terminal then performs an internal authorization on the basis of all available data, likewise comprising for instance updated data from the payment service provider, such as a blacklist (figure 4). Step 70 provides for an optional online authorization when the mobile station is connected to a server 50 of a payment service provider.

In step 71 mobile station 20 receives authorization of the payments from payment terminal 40. In step 72 the mobile station receives the encrypted data relating to the transaction for storage thereof until connection can be made to a network via which connection can be made to server 50 of the payment service provider. In step 74 there is a wait for the connection required for this purpose. During this step mobile station 20 can be used for one or other transaction or any other use thereof. In step 75 the encrypted data relating to the transactions are sent to computer system 1 of the airline or server 50 of the payment service provider. This communication process includes an acknowledgment to the mobile station.

In step 77 the data relating to the transactions are sent to the server of the payment service provider and in step 79 these data are received by the server of the payment service provider. In step 80 an acknowledgment is sent. In step 68 an acknowledgment is received.

Fig. 4 shows a preflight preparation process. In step 81 updated data relating to authorization of payments, such as blacklists and business rules, are compiled in server 50 of the payment service provider and made ready for sending thereof and finally sent to system 2 of the airline. In step 82 the payment and authorization-related updates are received and processed for use in the mobile station. In step 83 passenger lists are compiled. In step 84 passenger name records are compiled. In step 85 lists of passenger name records are compiled for specific flights and sent to system 2. In step 87 mobile station-specific synchronization packs are compiled. These synchronization packs 1 comprise payment data from the payment service provider. In step 88 there is then a wait for a connection to the mobile station. When there is a connection to the mobile station in step 89, the information is transmitted in preferably encrypted form. In step 90 the synchronization pack is received by the mobile station. In step 91 the mobile station is ready for the method of figure 3 following processing of the data.

The present invention has been described in the foregoing on the basis of several preferred embodiments. Different aspects of different embodiments are deemed described in combination with each other, wherein all combinations which can be deemed by a skilled person in the field as falling within the scope of the invention on the basis of reading of this document are included. These preferred embodiments are not limitative for the scope of protection of this document. The rights sought are defined in the appended claims.

## Claims

1. Method for making specific task information available via a mobile station, preferably comprising a PDA, tablet or a mobile phone, to a user such as personnel on duty, wherein the method comprises steps for:
- compiling the task information by means of a server,
- transmitting the task information from the server to the mobile station of the user,
- determining an availability time period for the task information for the users,
- making the task information retrievable in readable manner on the mobile station within the availability time period.

2. Method as claimed in claim 1, wherein the information is stored in encrypted manner in a memory of the mobile station and/or the information is transmitted in encrypted form from the server to the mobile station.

3. Method as claimed in claim 1 and/or 2, comprising steps for the server accessing source data systems, such as systems holding data of importance to the user during the availability time period, which systems can for instance comprise operational information of airlines or other companies wherein information can be of importance to the user in a pre-determinable availability time period.

4. Method as claimed in one or more of the foregoing claims, comprising steps for sending a push message, such as an SMS or an e-mail, from the server for the purpose of indicating to the mobile station and/or the user that task information with an upcoming availability time period has been compiled for retrieval thereof.

5. Method as claimed in one or more of the foregoing claims, comprising steps for encrypting the task information and/or dividing thereof into transport packets prior to transmission to the mobile station.

6. Method as claimed in one or more of the foregoing claims, comprising steps by the mobile station and/or the server for determining the desirable data transport technology for delivering this information to the mobile station, such as via a WIFI connection and/or a mobile data connection, UMTS connection, 2G connection, 3G connection or 4G connection.

7. Method as claimed in one or more of the foregoing claims, comprising steps for erasing the task information on the basis of an indicative event, such as expiry of the availability time period, expiry of a pre-determinable time period of non-use of the mobile station, expiry of a predetermined time period of non-response to a notification to the mobile station and/or a number of incorrect attempts to log into the mobile station or an application for displaying the task information.

8. Method as claimed in claim 7, wherein the erasing is performed by erasing the memory by sending new data which overwrites the old data, or by sending an empty datafile to overwrite the old data.

9. Method as claimed in one or more of the foregoing claims, comprising steps for sending additions or changes entered by the user from the mobile station to the server.

10. Method as claimed in one or more of the foregoing claims, wherein use is made of a VPN connection for the purpose of sending data between the mobile station and the server.

11. Method as claimed in one or more of the foregoing claims, wherein use is made on the mobile station of a dedicated application relating to execution of method steps in respect of the mobile station.

12. Method as claimed in one or more of the foregoing claims, comprising steps for the server querying an operations application of an operations system relating to the compiling of the task information.

13. Method as claimed in one or more of the foregoing claims, wherein the task information is information relating to work activities of the user, such as updated passenger lists with seat numbers.

14. Method as claimed in one or more of the foregoing claims, comprising steps for performing checks, steps relating to the functioning of the users, such as a "fit to fly" test, a questionnaire relating to food safety, the entering of medical registration information.

15. Computer system comprising means for performing all steps in accordance with one or more of the foregoing claims.

16. Computer program product comprising software which, when run on a system, enables the system to perform all method steps of claims 1 - 14.

## Patentansprüche

1. Verfahren, um bestimmte Aufgabeninformationen über eine Mobilstation, die vorzugsweise einen PDA, ein Tablet oder ein Mobiltelefon umfasst, einem Benutzer, wie z. B. dem diensthabenden Personal, zur Verfügung zu stellen, wobei das Verfahren die folgenden Schritte umfasst:
- zusammenstellen der Aufgabeninformationen über einen Server,
- übertragen der Aufgabeninformationen vom Server an die Mobilstation des Benutzers,
- bestimmen eines Verfügbarkeitszeitraums für die Aufgabeninformationen für die Benutzer,
- ermöglichen, dass die Aufgabeninformationen innerhalb der Verfügbarkeitsperiode lesbar auf der Mobilstation abrufbar sind.

2. Verfahren nach Anspruch 1, wobei die Informationen verschlüsselt in einem Speicher der Mobilstation gespeichert werden und/oder die Informationen verschlüsselt vom Server an die Mobilstation übertragen werden.

3. Verfahren nach Anspruch 1 und/oder 2, umfassend Schritte für den Server, der auf Brunnendatensysteme zugreift, wie Systeme, die während des Verfügbarkeitszeitraums für den Benutzer wichtige Daten halten, wobei diese Systeme beispielsweise Operationsinformationen von Fluggesellschaften oder andere Unternehmen umfassen können, bei denen Informationen für den Benutzer in einem vorab bestimmbaren Verfügbarkeitszeitraum von Bedeutung sein können.

4. Verfahren nach einem oder mehreren der vorhergehenden Ansprüche, umfassend Schritte zum Senden einer Push-Nachricht, wie beispielsweise einer SMS oder einer E-Mail, von dem Server zum Anzeigen an die Mobilstation und/oder die Benutzer, dass Task-Informationen mit einem bevorstehenden Verfügbarkeitszeitraum für dessen Abruf zusammengestellt wurden.

5. Verfahren nach einem oder mehreren der vorhergehenden Ansprüche, umfassend Schritte zum Verschlüsseln der Aufgabeninformationen und/oder Aufteilen derselben in Transportpakete vor der Übertragung an die Mobilstation.

6. Verfahren nach einem oder mehreren der vorhergehenden Ansprüche, umfassend Schritte der Mobilstation und/oder des Servers zum Bestimmen der gewünschten Datentransporttechnologie zum Übermitteln dieser Informationen an die Mobilstation, beispielsweise über eine WIFI-Verbindung und/oder eine mobile Datenverbindung, UMTS-Verbindung, 2G-Verbindung, 3G-Verbindung oder 4G-Verbindung.

7. Verfahren nach einem oder mehreren der vorhergehenden Ansprüche, umfassend Schritte zum Löschen der Task-Information auf der Grundlage eines indikativen Ereignisses, wie Ablauf der Verfügbarkeitszeitspanne, Ablauf einer vorab bestimmbaren Zeitspanne eines Nichtgebrauchs der Mobilstation, Ablauf einer vorbestimmten Zeitspanne einer Nichtantwort auf eine Benachrichtigung an die Mobilstation und/oder einer Anzahl von falschen Versuchen, sich bei der Mobilstation oder einer Anwendung zum Anzeigen der Aufgabeninformationen anzumelden.

8. Verfahren nach Anspruch 7, wobei das Löschen durch Löschen des Speichers durch Senden neuer Daten, die die alten Daten überschreiben, oder durch Senden einer leeren Datei, um die alten Daten zu überschreiben, durchgeführt wird.

9. Verfahren nach einem oder mehreren der vorhergehenden Ansprüche, umfassend Schritte zum Senden von vom Benutzer eingegebenen Ergänzungen oder Änderungen von der Mobilstation an den Server.

10. Verfahren nach einem oder mehreren der vorhergehenden Ansprüche, wobei eine VPN-Verbindung zum Zweck des Sendens von Daten zwischen der Mobilstation und dem Server verwendet wird.

11. Verfahren nach einem oder mehreren der vorhergehenden Ansprüche, wobei auf der Mobilstation eine dedizierte Anwendung verwendet wird, die sich auf die Ausführung von Verfahrensschritten in Bezug auf die Mobilstation bezieht.

12. Verfahren nach einem oder mehreren der vorhergehenden Ansprüche, umfassend Schritte für den Server, der eine Operationsanwendung eines Operationssystems abfragt, das sich auf das Kompilieren der Aufgabeninformationen bezieht.

13. Verfahren nach einem oder mehreren der vorhergehenden Ansprüche, wobei die Aufgabeninformationen Informationen sind, die sich auf Arbeitsaktivitäten des Benutzers beziehen, wie etwa aktualisierte Passagierlisten mit Sitznummern.

14. Verfahren nach einem oder mehreren der vorhergehenden Ansprüche, umfassend Schritte zum Durchführen von Prüfungen, Schritte in Bezug auf die Funktion der Benutzer, wie etwa einen Test für die Flugbereitschaft, einen Fragebogen in Bezug auf die Lebensmittelsicherheit, das Eintreten von medizinischem Material Registrierungsinformationen.

15. Computerhardware wie eine Mobilstation und/oder ein Server, umfassend Mittel zum Durchführen aller Schritte gemäß einem oder mehreren der vorhergehenden Ansprüche.

16. Computerprogrammprodukt, das Software umfasst, die, wenn sie auf einer geeigneten Computerhardware ausgeführt wird, wie etwa einer Mobilstation und/oder einem Server, der Computerhardware zur Ausführung aller Schritte mindestens eines Verfahrens gemäß einem oder mehreren der vorhergehenden Ansprüche konfiguriert.

## Revendications

1. Procédé de mise à disposition d'informations de tâche via une station mobile, comprenant de préférence un PDA, une tablette ou un téléphone mobile, à un utilisateur tel qu'un personnel en service, en ce qu'il comprend les étapes suivantes:
- compiler les informations de tâche au moyen d'un serveur,
- transmettre les informations de tâche du serveur à la station mobile de l'utilisateur,
- déterminer une période de disponibilité pour les informations de tâche pour les utilisateurs,
- rendre les informations de tâche récupérables de manière lisible sur la station mobile pendant la période de temps de disponibilité.

2. Procédé selon la revendication 1, dans lequel l'information est stockée de manière cryptée dans une mémoire de la station mobile et/ou les informations sont transmises sous forme cryptée du serveur à la station mobile.

3. Procédé selon la revendication 1 et/ou 2, comprenant des étapes pour que le serveur accède à des systèmes de données source, tels que des systèmes contenant des données importantes pour l'utilisateur pendant la période de disponibilité, lesquels systèmes peuvent par exemple comprendre des informations opérationnelles de compagnies aériennes ou d'autres entreprises dans lesquelles des informations peuvent être importantes pour l'utilisateur au cours d'une période de temps de disponibilité prédéterminable.

4. Procédé selon une ou plusieurs des revendications précédentes, comprenant les étapes pour envoyer un message push, tel qu'un SMS ou un courrier électronique, depuis le serveur afin d'indiquer à la station mobile et/ou au destinataire. utilisateur, les informations de tâche avec une période de disponibilité à venir ont été compilées pour en permettre la récupération.

5. Procédé selon une ou plusieurs des revendications précédentes, comprenant des étapes pour chiffrer les informations de tâche et/ou les diviser en des paquets de transport avant leur transmission à la station mobile.

6. Procédé selon une ou plusieurs des revendications précédentes, comprenant les étapes à suivre par la station mobile et/ou le serveur pour déterminer la technologie de transport de données souhaitable pour délivrer ces informations à la station mobile, par exemple via une connexion WIFI et/ou une connexion de données mobile, une connexion UMTS, une connexion 2G, une connexion 3G ou une connexion 4G.

7. Procédé selon une ou plusieurs des revendications précédentes, comprenant des étapes pour effacer l'information de tâche sur la base d'un événement indicatif, tel que l'expiration du délai de disponibilité, l'expiration d'un délai prédéterminé de non-utilisation de la station mobile, d'expiration d'une période de temps prédéterminée de non-réponse à une notification à la station mobile et/ou d'un nombre de tentatives incorrectes de se connecter à la station mobile ou à une application pour afficher les informations de tâche.

8. Procédé selon la revendication 7, dans lequel l'effacement est effectué en effaçant la mémoire en envoyant de nouvelles données qui écrasent les anciennes données, ou en envoyant un fichier de données vide pour écraser les anciennes données.

9. Procédé selon l'une ou plusieurs des revendications précédentes, comprenant des étapes pour envoyer des ajouts ou des modifications saisies par l'utilisateur à partir de la station mobile vers le serveur.

10. Procédé selon l'une ou plusieurs des revendications précédentes, dans lequel on utilise une connexion VPN pour l'envoi de données entre la station mobile et le serveur.

11. Procédé selon l'une ou plusieurs des revendications précédentes, dans lequel on utilise sur la station mobile une application dédiée relative à l'exécution d'étapes de procédé concernant la station mobile.

12. Procédé selon l'une ou plusieurs des revendications précédentes, comprenant des étapes pour que le serveur interroge une application d'opérations d'un système d'exploitation concernant la compilation des informations de tâche.

13. Procédé selon l'une ou plusieurs des revendications précédentes, dans lequel les informations de tâche sont des informations relatives aux activités professionnelles de l'utilisateur, telles que des listes de passagers mises à jour avec des numéros de siège.

14. Procédé selon une ou plusieurs des revendications précédentes, comprenant des étapes pour effectuer des contrôles, des étapes relatives au fonctionnement des utilisateurs, tel qu'un test «d'aptitude à voler», un questionnaire relatif à la sécurité alimentaire, la saisie de données médicales. Information d'inscription.

15. Matériel informatique tel qu'une station mobile et/ou un serveur comprenant des moyens pour effectuer toutes les étapes conformément à une ou plusieurs des revendications précédentes.

16. Produit programme d'ordinateur comprenant un logiciel qui, lorsqu'il est exécuté sur un matériel informatique approprié, tel qu'une station mobile et/ou un serveur, permet au matériel informatique d'exécuter toutes les étapes d'au moins un procédé selon l'une ou plusieurs des revendications précédentes.
